(19) Europäisches Patentamt
European Patent Office
Office européen des brevets

(11) **EP 3 109 668 B1**

(12) **FASCICULE DE BREVET EUROPEEN**

(45) Date de publication et mention
de la délivrance du brevet:
**03.04.2024 Bulletin 2024/14**

(21) Numéro de dépôt: **16176376.8**

(22) Date de dépôt: **27.06.2016**

(51) Classification Internationale des Brevets (IPC):
**G01S 7/52** *(2006.01)* **G01S 15/87** *(2006.01)*
**G01S 15/46** *(2006.01)* **G01S 15/93** *(2020.01)*
**A61H 3/06** *(2006.01)* **G01C 21/20** *(2006.01)*

(52) Classification Coopérative des Brevets (CPC):
**G01S 15/93; A61H 3/061; G01S 15/876;**
A61H 2003/063; A61H 2201/0153;
A61H 2201/0188; A61H 2201/1635;
A61H 2201/5007; A61H 2201/5012;
A61H 2201/5048; A61H 2201/5064;
A61H 2201/5069; A61H 2201/5079;
A61H 2201/5082; A61H 2201/5084; (Cont.)

(54) **APPAREIL À MAIN POUR UN UTILISATEUR DÉFICIENT VISUEL**

HANDGERÄT FÜR EINEN BENUTZER MIT SEHSCHWÄCHE

HANDHELD APPARATUS FOR A VISUALLY IMPAIRED USER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.06.2015 FR 1555896**

(43) Date de publication de la demande:
**28.12.2016 Bulletin 2016/52**

(73) Titulaire: **GOSENSE**
**69002 Lyon (FR)**

(72) Inventeurs:
• **BIROT, François**
**69110 Sainte Foy Les Lyon (FR)**
• **VAUCHAUSSADE DE CHAUMONT, Hugues**
**69002 Lyon (FR)**

(74) Mandataire: **Regimbeau**
**87, rue de Sèze**
**69451 Lyon Cedex 06 (FR)**

(56) Documents cités:
EP-A1- 2 641 579        EP-A2- 2 290 343
WO-A2-2012/040703        US-A1- 2012 062 357

(52) Classification Coopérative des Brevets (CPC):
(Cont.)
A61H 2201/5092; A61H 2201/5097; G01C 21/20;
G01S 7/52006; G01S 2015/465

## Description

La présente invention concerne un appareil à main pour déficient visuel comprenant un système de détection d'obstacles.

Lors d'un déplacement, une personne déficiente visuel, également désignée comme malvoyante ou aveugle, ou toute personne en situation de cécité, doit suppléer à sa vue défaillante pour détecter des obstacles. La solution la plus répandue pour ce faire est l'utilisation d'une canne, souvent appelée canne blanche en raison de sa couleur caractéristique. La personne maintient cette canne devant elle et lui imprime un mouvement de balayage de part et d'autre de sa direction de déplacement, afin de détecter les obstacles par leur contact avec la canne.

Cette méthode, très ancienne et très répandue, n'est cependant pas complètement satisfaisante. En effet, la canne seule permet uniquement de détecter les obstacles au niveau du sol. Elle ne permet pas de détecter les obstacles en hauteur ni de détecter de façon sûre les trous au sol.

Des cannes intégrant des capteurs de distance électronique ont donc été proposées, afin de permettre aux déficients visuels de détecter et d'anticiper les obstacles. Il a notamment été proposé de munir une canne de télémètres, lasers ou ultrasons, déterminant la distance entre la canne et un obstacle, et émettant un signal d'alerte lorsque cette distance devient faible, sous la forme d'un retour tactile ou auditif. Par exemple, la demande WO2014006243 propose de doter une canne blanche de capteurs ultrasons directifs définissant des zones spatiales de détection à des hauteurs différentes dans lesquelles sont mesurées les distances entre la canne et les éventuels obstacles.

Néanmoins, de tels systèmes souffrent de défauts qui compliquent leur utilisation par les déficients visuels. En particulier, le manque de distinction entre les obstacles susceptibles de créer une gêne dans le déplacement et ceux qui ne le sont pas entraîne un grand nombre de retour d'information au déficient visuel, ce qui mobilise une forte charge cognitive de celui-ci. Par exemple, lorsque l'utilisateur déficient visuel longe un mur, celui-ci entraînera un signal d'alerte par intermittence lors du balayage de la canne, alors qu'il ne représente pas un obstacle pour l'utilisateur déficient visuel.

Le document WO2012/040703 propose une canne blanche pourvue d'un dispositif de détection télémétrique d'obstacles basée sur le temps de trajet de signaux lumineux, prenant en compte des informations sur le mouvement de la cane pour restreindre les informations traitées à un champ de détection s'étendant devant l'utilisateur de la canne blanche, afin de réduire la quantité d'informations transmises à l'utilisateur par une interface tactile.

Cependant, la simple restriction du champ de détection n'est pas optimale, et ne permet notamment pas une prise en compte satisfaisante des obstacles détectés. En outre, la détection d'obstacles basée sur le temps de trajet de signaux lumineux présente une consommation électrique élevée, ce qui en limite l'utilisation.

En outre, ces solutions se contentent seulement de détecter la présence d'obstacles dans le champ de détection de leur capteur. Elles ne permettent pas de localiser ces obstacles dans l'environnement spatial de l'utilisateur, et ne permettent donc pas d'informer celui-ci de la localisation desdits obstacles. Par ailleurs, ces solutions n'identifient pas les obstacles et ne permettent pas le suivi d'un obstacle et notamment l'analyse de son déplacement.

La demande de brevet EP 2 641 579 A1 propose une canne munie de capteurs de différents types, en combinant détecteur de lumière, détecteur de métaux et détecteur sonore. Il s'agit de pouvoir déterminer la nature des obstacles rencontrés. Toutefois, il s'avère que la nature des obstacles est moins un problème que la localisation précise de ceux-ci et leur suivi, ce que ne permet pas la canne proposée.

D'autres systèmes ont été proposés exploitant d'autres dispositifs qu'un dispositif à main comme la canne blanche. Ainsi, la demande de brevet US 2012/0062357 A1 propose des lunettes pourvues de capteurs pour détecter les obstacles. Toutefois, un tel système est encombrant puisqu'il requiert le port par le déficient visuel de lunettes lourdes et peu discrètes. De plus, un tel système ne correspond pas aux habitudes prises par les déficients visuels avec leur canne, et demande de leur part un réapprentissage exigeant.

## PRESENTATION DE L'INVENTION

Un but général de l'invention est de pallier aux inconvénients des systèmes de l'état de la technique mentionnés ci-dessus, en proposant, plutôt qu'une simple détection télémétrique d'obstacles éventuels, une localisation dans l'espace de ces obstacles au moyen d'ultrasons. La localisation dans l'espace tridimensionnel des obstacles permet de traiter ceux-ci au mieux pour sécuriser le déplacement du déficient visuel sans surcharger celui-ci de signaux d'alerte.

A cet effet, il est proposé un procédé de localisation d'obstacles au moyen d'un appareil à main appareil à main pour un utilisateur déficient visuel comprenant un système de détection d'obstacles monté sur ledit appareil à main comprenant des transducteurs à ultrasons configurés pour émettre des ultrasons et enregistrer des échos desdits ultrasons et des moyens d'alerte de l'utilisateur adaptés pour informer ledit utilisateur de la proximité d'un obstacle, le système comprenant un dispositif de mesure de mouvement adapté pour mesurer le mouvement de l'appareil à main, le procédé comprenant la mise en oeuvre itérative des étapes selon lesquelles:

    a) un transducteur émet des ultrasons,
    b) au moins trois transducteurs non alignés enregistrent des échos des ultrasons sur un obstacle,

c) une détermination de la localisation de l'obstacle par rapport aux transducteurs est mise en oeuvre à partir des temps d'arrivée des échos aux transducteurs et/ou des différences de temps d'arrivée des échos aux transducteurs,

d) la position et l'orientation de l'utilisateur par rapport aux transducteurs est déterminée à partir des mesures du mouvement de l'appareil à main provenant du dispositif de mesure de mouvement, de la position connue des transducteurs sur l'appareil à main, et de la posture connue de maintien de l'appareil à main par l'utilisateur, la localisation de l'obstacle par rapport à l'utilisateur est déterminée à partir de la localisation de l'obstacle par rapport aux transducteurs et de la position et l'orientation de l'utilisateur par rapport aux transducteurs, couplées à une connaissance a priori de la posture de maintien de l'appareil à main par l'utilisateur, ,

e) une alerte est émise à destination de l'utilisateur en fonction de la localisation de l'obstacle par rapport à l'utilisateur et du déplacement de l'obstacle par rapport à l'utilisateur.

Ce procédé est avantageusement complété par les caractéristiques suivantes, prises seules ou en une quelconque de leur combinaison techniquement possible:

- la détermination de la localisation de l'obstacle par rapport aux transducteurs est mise en oeuvre par trilatération à partir des temps d'arrivée des échos aux transducteurs ou par multilatération à partir des différences de temps d'arrivée des échos aux transducteurs ;
- la localisation d'un obstacle comprend la détermination des coordonnées de chaque obstacle dans un repère absolu, indépendantes des mouvements de l'utilisateur et de l'appareil à main ;- le déplacement de l'obstacle par rapport à l'utilisateur est déterminé en comparant la localisation d'un obstacle à un instant avec des localisations dudit obstacle précédemment déterminées lors des itérations précédentes dans le repère absolu, puis la vitesse de l'obstacle et sa direction par rapport à l'utilisateur sont déterminées, et l'émission de l'alerte prend en compte la vitesse de l'obstacle dans le référentiel de l'utilisateur et la trajectoire suivie par l'obstacle dans le référentiel de l'utilisateur;
- les ultrasons sont émis par le transducteur lors de l'étape a) sous la forme d'un train d'impulsions, le nombre d'impulsions variant entre les émissions de deux itérations consécutives ;
- le nombre d'impulsion varie en fonction des obstacles détectés et/ou en fonction de la vitesse de déplacement de l'appareil à main ;
- le transducteur qui émet des ultrasons dans l'étape a) enregistre des ultrasons dans l'étape b) et/ou le transducteur qui émet les ultrasons dans l'étape a) change en fonction des itérations ;
- l'alerte est émise par des moyens d'émission sonore mettant en oeuvre une spatialisation du son en fonction de la localisation de l'obstacle.

L'invention concerne enfin un produit programme d'ordinateur comprenant des instructions de code de programme enregistrés sur un support utilisable dans un ordinateur pour commander l'exécution des étapes du procédé selon l'invention lorsque ledit programme est exécuté par des moyens de calcul de l'appareil à main selon l'invention.

L'invention concerne également un appareil à main pour un utilisateur déficient visuel comprenant un système de détection d'obstacles monté sur ledit appareil à main comprenant des transducteurs à ultrasons configurés pour émettre des ultrasons et enregistrer des échos desdits ultrasons et des moyens d'alerte de l'utilisateur adaptés pour informer ledit utilisateur de la proximité d'un obstacle, dans lequel au moins trois transducteurs à ultrasons sont non alignés et le système comprend un dispositif de mesure de mouvement adapté pour mesurer le mouvement de l'appareil à main, le système étant configuré pour déterminer des temps d'arrivée des échos aux transducteurs et/ou des différences de temps d'arrivée des échos aux transducteurs et pour mettre en oeuvre une localisation dans l'espace d'obstacles par rapport à l'utilisateur à partir des échos enregistrés et de la mesure du mouvement de l'appareil à main, l'appareil à main étant configuré pour mettre en oeuvre le procédé selon l'invention.

Cet appareil à main est avantageusement complété par les caractéristiques suivantes, prises seules ou en une quelconque de leur combinaison techniquement possible:

- le système est configuré pour mettre en oeuvre une localisation d'obstacles dans l'espace par trilatération à partir des temps d'arrivée des échos aux transducteurs ou par multilatération à partir des différences de temps d'arrivée des échos aux transducteurs;
- le système est configuré pour mettre en oeuvre la détermination de la localisation d'obstacles de façon itérative, et pour déterminer un déplacement d'un obstacle par rapport à l'utilisateur en comparant la localisation de l'obstacle avec des localisations dudit obstacle précédemment déterminées;

- les moyens d'alerte de l'utilisateur comprennent des moyens d'émission sonore et/ou un vibreur;
- le système comprend une sonde de température adaptée pour mesurer la température, le système étant configuré pour déterminer une vitesse des ultrasons en fonction de ladite température;
- les moyens d'alerte sont des moyens d'émission sonore adaptés pour restituer un son spatialisé et munis d'au moins un capteur de mouvement;
- le système de détection comprend en outre des moyens de communication adaptés pour recevoir des informations de positionnement, ledit système étant configuré pour déterminer une géolocalisation à partir desdites informations de positionnement et à partir des mesures du mouvement dudit appareil.

PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels:

- la figure 1 est un schéma illustrant un système de détection d'obstacles monté sur une canne pour déficient visuel selon un mode de réalisation possible, vu de dessus et de côté;
- la figure 2a est un schéma montrant une vue d'ensemble d'un déficient visuel utilisant une canne munie d'un système de détection d'obstacles selon un mode de réalisation de l'invention;
- la figure 2b est un schéma illustrant l'utilisation du système de détection d'obstacles par un déficient visuel selon un mode de réalisation possible;
- les figures 3a à 3e sont des schémas illustrant différentes étapes d'émission et de réception d'ondes ultrasonores par les transducteurs;
- la figure 4 est un diagramme schématique illustrant différentes étapes du procédé selon un mode de réalisation possible de l'invention.

DESCRIPTION DETAILLEE

On entend par appareil à main un appareil portatif destiné à être tenu par la main d'un utilisateur déficient visuel, afin de l'assister. Dans un mode de réalisation préférentiel, l'appareil à main est une canne munie d'un système de détection d'obstacle. La description qui suit est ainsi faite de manière non limitative en référence à une canne en tant qu'appareil à main pour un utilisateur déficient visuel. L'appareil à main pourrait cependant prendre une autre forme, et être par exemple constituée d'une zone de préhension, ou poignée, sans la tige caractéristique d'une canne.

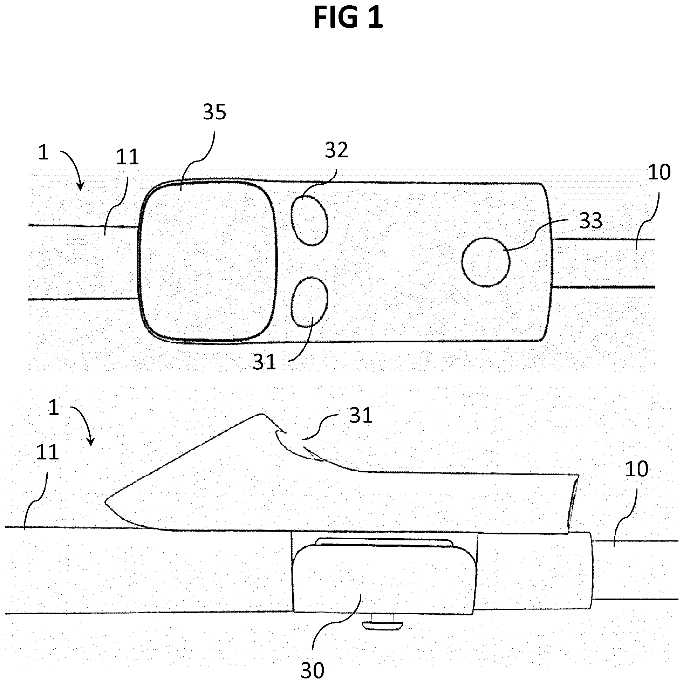

En référence aux figures 1 à 3, la canne 1 pour déficient visuel comprend une tige 10 se terminant à une extrémité par une zone de préhension 11 par laquelle la canne 1 est tenue par un utilisateur 2, et à l'extrémité opposée par un embout 12. La canne 1 est munie d'un système de détection d'obstacles 3. Celui-ci peut être intégré à la canne 1 ou monté sur celle-ci grâce à un moyen de fixation 30, notamment du type enserrant la tige 10 de la canne 1. De manière optionnelle, le système de détection d'obstacle 3 peut comprendre un éclairage, par exemple constitué d'une ou de plusieurs diodes électroluminescentes, placé sur un côté du système de détection d'obstacle 3 en direction de l'embout 12, et dont le faisceau lumineux est dirigé le long de la tige 10 de la canne 1. L'éclairage de la tige 10 de la canne permet de rendre celle-ci visible dans l'obscurité, améliorant la visibilité de l'utilisateur déficient visuel et donc sa sécurité, d'autant plus lorsque la tige 10 de la canne 1 est munie de zones réfléchissant la lumière tels que des autocollants collés sur la canne 1.

Le système de détection d'obstacles 3 comprend un dispositif de mesure de mouvement adapté pour mesurer le mouvement de la canne. De préférence, le dispositif de mesure de mouvement comprend au moins un instrument de mesure de position angulaire, éventuellement au moyen de la mesure de vitesses angulaires, comme par exemple un gyroscope ou un gyromètre, ou bien une boussole.

Typiquement, le dispositif de mesure de mouvement est une centrale inertielle, comprenant un ou plusieurs accéléromètres pour mesurer les accélérations selon trois directions non colinéaires, et d'un ou plusieurs gyromètres ou gyroscopes pour mesurer des accélérations angulaires ou des positions angulaires. Le dispositif de mesure de mouvement est solidaire de la canne 1 et permet de déterminer les mouvements de la canne 1, et d'estimer sa position relative à l'utilisateur 2 de la canne 1.

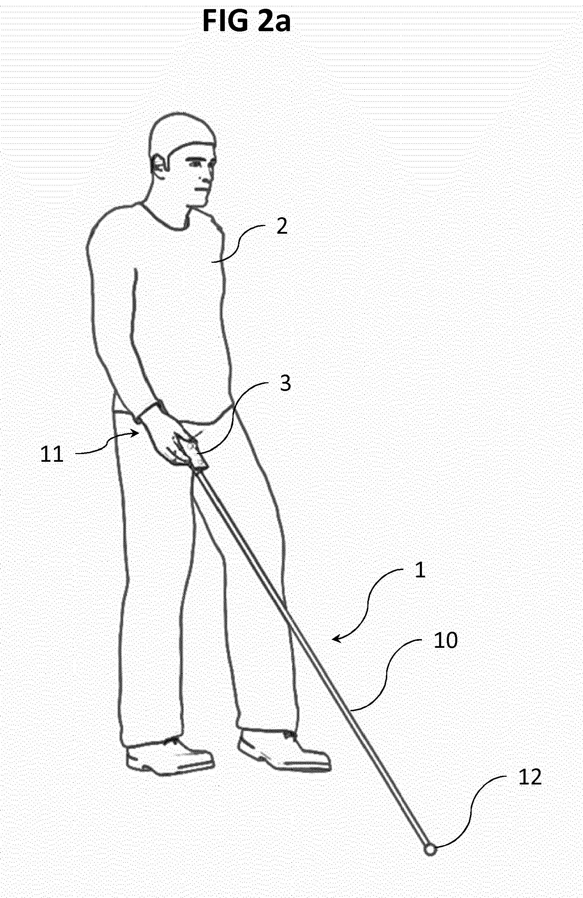

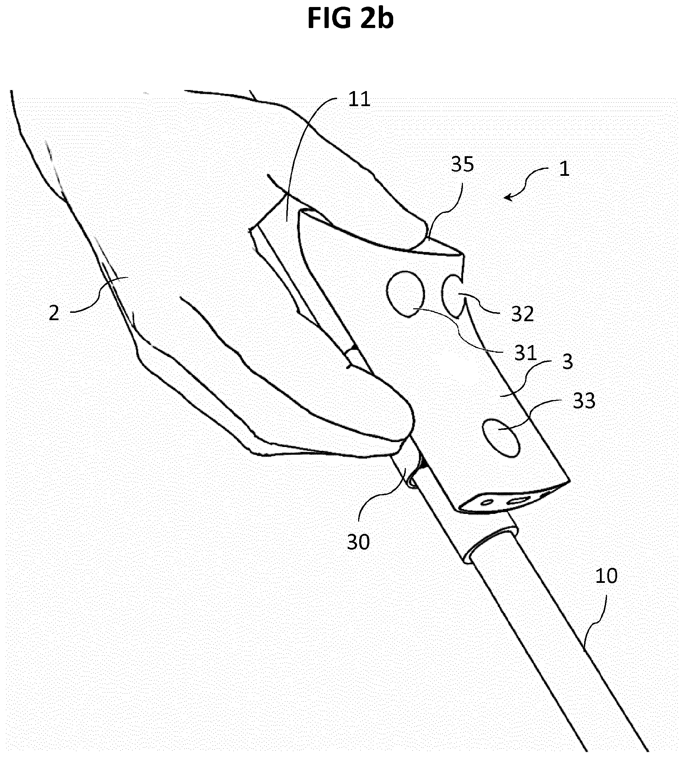

Le système de détection d'obstacles 3 comprend au moins trois transducteurs 31, 32, 33 à ultrasons. Ces trois transducteurs 31, 32, 33 ne sont pas alignés, c'est-à-dire qu'ils ne forment pas une ligne. Les transducteurs 31, 32, 33 sont configurés pour émettre des ultrasons. Les ultrasons émis présentent une fréquence supérieure ou égale à 20 kHz, de préférence supérieure ou égale à 30 kHz, et inférieure à 80 kHz, de préférence inférieure à 60 kHz. Dans un mode de réalisation préférentiel utilisé à titre d'exemple illustratif, les ultrasons sont émis à une fréquence de 40 kHz. Les transducteurs 31, 32, 33 n'ont pas à être directifs en émission. Ils peuvent ainsi présenter un cône d'émission, défini par la limite d'une atténuation en amplitude inférieure à 6 dB, présentant un angle supérieur à 60° verticalement et 45° horizontalement en émission dans une configuration d'utilisation de la canne 1 comme illustrée sur la figure 2.

Chacun des trois transducteurs présente de préférence une surface d'émission avec un rayon supérieur à 2 mm. De préférence également, les transducteurs sont éloignés les uns des autres d'une distance d'au moins 5 mm prise entre leurs centres respectifs.

Les transducteurs 31, 32, 33 sont préférentiellement disposés sur la canne 1 de sorte à émettre des ultrasons dans la direction opposée à celle de l'utilisateur 2 déficient visuel. L'utilisateur 2 déficient visuel dirigeant sa canne 1 dans la direction dans laquelle il veut s'assurer de l'absence d'obstacles, la direction de la canne 1, opposée à celle de l'utilisateur déficient visuel 2, constitue une direction privilégiée de détection des obstacles. Cela permet également d'éviter que l'utilisateur 2 déficient visuel réfléchisse les ultrasons et soit considéré comme un obstacle.

Les transducteurs, surtout s'il y en a beaucoup, peuvent également être disposés sur la canne 1 de sorte à pouvoir émettre des ultrasons tout autour de la canne 1. Une détermination de la position et des mouvements de la canne 1 permet de sélectionner les transducteurs 31, 32, 33 à utiliser en fonction de l'orientation de la canne 1 et de son mouvement : on sélectionne de préférence alors les transducteurs 31, 32, 33 dans la direction de déplacement de la canne 1 ou de l'utilisateur 2.

Les transducteurs 31, 32, 33 n'émettent pas des ultrasons en continu; ils sont également configurés pour enregistrer les échos ultrasonores renvoyés par les obstacles. De même que pour l'émission, les transducteurs 31, 32, 33 n'ont pas à être directifs en réception. Ils peuvent ainsi présenter un cône de réception, défini par la limite d'une atténuation en amplitude inférieure à 6 dB, présentant un angle supérieur à 45° en réception.

Chaque transducteur 31, 32, 33 peut aussi bien émettre des ultrasons que les réceptionner et les enregistrer. Ainsi, chaque transducteur alterne entre des phases où il est émetteur et récepteur et des phases où il est récepteur uniquement. Plus précisément, après que l'un des trois transducteurs 31 ait émis des ultrasons, tous les trois transducteurs 31, 32, 33 enregistrent les échos ultrasonores résultant de la réflexion des ultrasons venant d'être émis. Après un temps donné, l'un des autres transducteurs 32, 33 est sélectionné comme transducteur émetteur, et se met à émettre des ultrasons à son tour, avant que tous les trois transducteurs 31, 32, 33 se mettent à enregistrer les échos. Le transducteur émetteur peut changer à chaque itération. Les transducteurs 31, 32, 33 sont chacun adaptés pour alternativement émettre des ultrasons et enregistrer les échos desdits ultrasons. Le transducteur émetteur peut également être sélectionné en fonction de sa position et de son orientation par rapport à la direction de déplacement de l'utilisateur, afin de détecter au mieux les obstacles avec lesquels il y a un risque de collision.

Les trois transducteurs 31, 32, 33 sont configurés pour émettre et recevoir des ultrasons dans les mêmes fréquences, afin que les échos issus d'ultrasons générés par un transducteur puissent être reçus et traités par un autre transducteur.

Le système de détection d'obstacles 3 peut également comprendre une boussole électronique, par exemple sous la forme d'un magnétomètre, afin de déterminer une mesure du champ magnétique terrestre pour corriger une dérive du dispositif de mesure de mouvement et déterminer l'orientation du dispositif relative au nord magnétique.

Des moyens de calcul sont prévus pour traiter les données issues du dispositif de mesure de mouvement et des transducteurs 31, 32, 33, ainsi que pour les commander. Les moyens de calcul comprennent au moins un processeur, typiquement un processeur de signal numérique, plus connu par l'acronyme DSP pour l'anglais "Digital Signal Processor" et une mémoire. Par ailleurs, une batterie électrique est prévue pour alimenter en électricité le système de détection d'obstacles 3.

Le système est configuré pour déterminer des temps d'arrivée des échos aux transducteurs 31, 32, 33, et/ou des différences de temps d'arrivée des échos aux transducteurs 31, 32, 33. Contrairement à d'autres méthodes, notamment la triangulation, qui sont basées sur les durée de propagation, on exploite ici les instants de réception.

A cet effet, les transducteurs sont utilisés pour émettre des ultrasons et enregistrer des échos desdits ultrasons. Plus précisément, le procédé comprend de façon itérative l'émission d'ultrasons par un transducteur 31, 32, 33, et la réception des éventuels échos par les transducteurs 31, 32, 33, puis le traitement des données récoltées comme décrit plus bas. Une nouvelle itération est ensuite effectuée, avec un nouveau cycle comprenant l'émission d'ultrasons par un transducteur, la réception des éventuels échos par les transducteurs 31, 32, 33, et le traitement des données. Les différentes itérations sont espacées dans le temps de quelques millisecondes, afin que des échos des ultrasons émis lors d'une itération précédente ne puissent être détectés lors de l'itération suivante.

Une première étape optionnelle consiste à définir les transducteurs actifs. En effet, le système de détection d'obstacles 3 peut comprendre plus de trois transducteurs ou plus de quatre transducteurs. Dans ce cas, tous ne sont pas nécessairement utilisés. Il peut y avoir une sélection d'au moins trois transducteurs ou d'au moins quatre transducteurs, notamment basée sur leur disposition : on peut privilégier les transducteurs dont l'emplacement est le plus favorable à une détection des obstacles compte-tenu du mouvement de la canne 1. Ce seront par exemple les transducteurs situés dans la direction du mouvement. Le choix des transducteurs en fonction de la position du système et/ou du déplacement de l'utilisateur permet de ne pas avoir à imposer à celui-ci un positionnement spécifique du système. Dans la description qui suit, il ne sera fait référence de manière non limitative à la présence de trois transducteurs 31, 32, 33 seulement, dans la mesure où il s'agit du nombre minimal de transducteurs pour effectuer la trilatération, mais plus de transducteurs peuvent être utilisés. En particulier, on peut utiliser au moins quatre transducteurs non alignés pour mettre en oeuvre une multilatération.

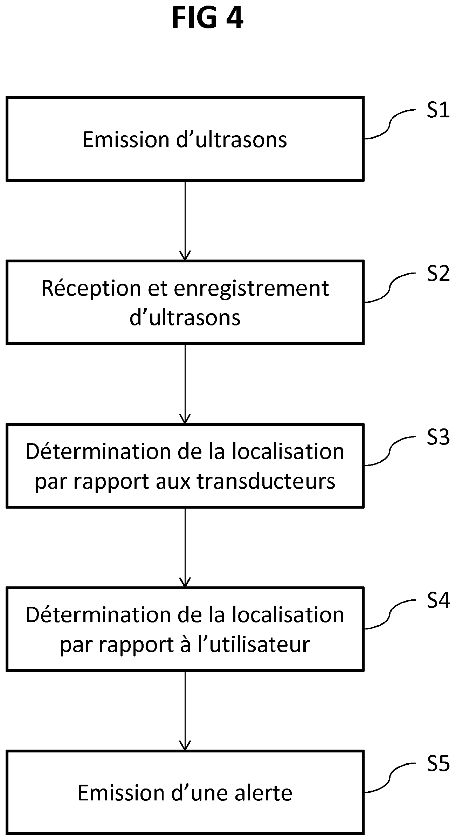

En référence à la figure 4, un transducteur émetteur 31 émet des ultrasons (étape S1), et directement après l'émission, les trois transducteurs 31, 32, 33 enregistrent (étape S2) les échos des ultrasons provenant de la réflexion desdits ultrasons sur des obstacles. Les ultrasons sont émis par trains d'impulsions de longueurs variables, afin de pouvoir détecter aussi bien des obstacles proches qu'éloignés. De préférence, les trains d'impulsions comprennent moins de 30 impulsions, et de préférence entre 4 et 20 impulsions, et de préférence encore entre 7 et 10 impulsions. Cela correspond à un compromis entre une puissance qui augmente avec le nombre d'impulsions, et une exigence de précision qui nécessite un nombre minimal d'impulsions. Par exemple, la puissance des ultrasons émis par les transducteurs croît pour atteindre un maximum de puissance d'émission après une durée correspondant à entre 20 et 25 impulsions à 40 kHz (soit environ 0,5 ms). Par conséquent, le nombre d'impulsions influe sur la puissance d'émission.

Le nombre d'impulsions peut varier, notamment en fonction des obstacles détectés. Par exemple, en l'absence d'obstacles, ou du moins d'obstacles proches, le nombre d'impulsions par train peut être augmenté, ou au contraire être réduit en cas de détection d'un obstacle proche. Le nombre d'impulsions peut également varier en fonction de la vitesse de déplacement de la canne 1, que ce soit la vitesse de la canne 1 ou la vitesse de déplacement de l'utilisateur déficient visuel 2 dans sa direction de déplacement. Après émission du train d'impulsions, le transducteur émetteur passe dans une phase de réception, afin de pouvoir enregistrer les ultrasons qu'il a émis.

Les transducteurs en réception enregistrent également les signaux qu'ils perçoivent dans des plages temporelles. Les plages temporelles doivent être suffisamment étendues pour permettre la détection des obstacles sur une distance de quelques mètres. Ainsi, de préférence, ces plages temporelles sont comprises entre 10 ms et 40 ms.

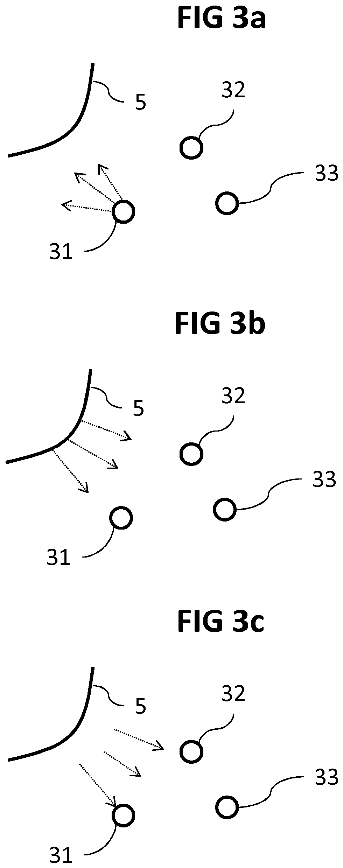

Les ultrasons émis par le transducteur émetteur se propagent dans l'air et, lorsqu'ils rencontrent un obstacle, sont réfléchis en direction des transducteurs qui enregistrent cet écho. En référence aux figures 3a à 3e, on a représenté de manière schématique trois transducteurs 31, 32, 33 non alignés et un obstacle 5, afin d'illustrer l'émission et la réception d'ultrasons dans le cadre de la trilatération mise en oeuvre.

Ainsi que représenté sur la figure 3a, un premier transducteur 31 joue le rôle de transducteur émetteur. Ce premier transducteur 31 émet des ultrasons, matérialisés ici par des flèches en pointillés, à un instant t0. Les autres transducteurs, c'est-à-dire le deuxième transducteur 32 et le troisième transducteur 33 n'émettent pas d'ultrasons : ils enregistrent d'éventuels échos ultrasonores. Les ultrasons émis par le premier transducteur 31 se propagent en direction de l'obstacle et sont, au moins en partie, réfléchis par l'obstacle 5 en direction des transducteurs 31, 32, 33, comme représenté sur la figure 3b. Après émission du train d'impulsions ultrasonores, le premier transducteur passe en mode réception afin d'enregistrer les échos des ultrasons qu'il a émis.

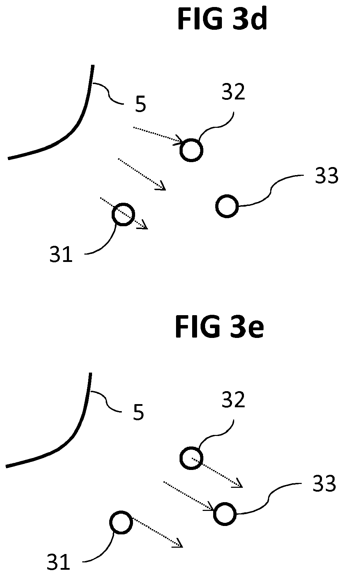

En raison du non-alignement des transducteurs 31, 32, 33, les ultrasons réfléchis par l'obstacle 5, c'est-à-dire les échos, vont parvenir aux différents transducteurs 31, 32, 33 à des instants différents. Ainsi que représenté sur la figure 3c, les ultrasons réfléchis atteignent d'abord, à un instant t1, le premier transducteur 31, puis, comme illustré sur la figure 3d, les ultrasons atteignent ensuite, à un instant t2, le deuxième transducteur 32, avant d'atteindre finalement, comme illustré sur la figure 3e, le troisième transducteur 33 à un instant t3.

Un autre train d'impulsions ultrasonores est ensuite émis par un des transducteurs qui prend alors le rôle de transducteur émetteur, et le procédé est itéré.

Les transducteurs 31, 32 et 33 peuvent par exemple être disposés de façon à former un triangle isocèle dont la base est parallèle au plan formé par le sol, lorsque le système de détection 3 est utilisé par l'utilisateur déficient visuel 2, typiquement perpendiculaire à la direction longitudinale de la tige 10 de la canne 1. L'espacement entre les transducteurs 31, 32 et 33 doit être suffisant afin que la durée séparant la réception d'un même écho ultrasonore par les différents transducteurs 31, 32 et 33 soit significative, tout en n'étant pas trop grand afin de faciliter le regroupement des échos enregistrés par chacun des transducteurs 31, 32 et 33 et pouvoir ainsi déterminer leur correspondance à des obstacles. Ainsi, à titre d'exemple préférentiel, la distance séparant le centre de chacun des transducteurs est comprise entre trois et dix fois la longueur d'onde du train d'impulsion émis, soit par exemple pour un train d'impulsion à 40 kHz, ces distances correspondent respectivement à environ 2,5 et 8,5 centimètres. Ainsi, de préférence, la distance séparant le centre de chacun des transducteurs est comprise entre 2 centimètres et 10 centimètres.

Les signaux acquis, représentatifs des ultrasons enregistrés, sont amplifiés et numérisés pour être traités par les moyens de calcul. A titre d'exemple, les signaux peuvent être échantillonnés à 200 kHz. Un filtrage passe-bande autour de la fréquence d'émission des ultrasons par le transducteur émetteur est ensuite appliqué afin de réduire le bruit. Une détection d'enveloppe est ensuite mise en oeuvre pour détecter l'enveloppe des signaux reçus, par exemple en prenant leurs valeurs absolues, filtrées par un filtre passe-bas.

L'éventuelle présence d'échos ultrasonores dans les signaux enregistrés peut être détectée au moyen d'un algorithme de détection de pics dans les signaux traités précédemment et dont l'enveloppe a été extraite. Par exemple, sur un intervalle déterminé, un pic est détecté lorsque la valeur du signal dépasse un seuil de détection donné et que le signe de la dérivée dudit signal passe de positif à négatif. Un pic correspond à l'écho ultrasonore d'une impulsion du train d'impulsion émis par le transducteur émetteur. On peut alors déterminer le temps d'arrivée d'un écho ultrasonore, qui correspond au temps où a été détecté le pic.

Une amélioration possible consiste à effectuer une corrélation entre l'enveloppe d'un écho théorique préalablement calculé ou enregistré et l'enveloppe extraite du signal. La détection de pics est ensuite effectuée comme précédemment, mais cette fois sur le résultat de la corrélation.

Lorsque des pics sont détectés, on peut déterminer la durée s'écoulant entre l'émission des impulsions et la réception des échos correspondants. Cette durée correspond au temps d'arrivée de l'écho ultrasonore. A partir de ce temps d'arrivée, on peut déterminer la distance de l'obstacle 5 par rapport au transducteur qui a enregistré le signal, au moyen de la connaissance de la vitesse de propagation des ultrasons.

On détermine d'abord la durée qu'ont mis les ultrasons pour se propager du transducteur émetteur 31 et parvenir jusqu'à l'obstacle 5. Pour ce transducteur émetteur 31, les ultrasons reçus ont parcouru dans les deux sens le même trajet, entre ledit transducteur émetteur 31 et l'obstacle 5. La durée de propagation des ultrasons du transducteur émetteur 31 pour parvenir l'obstacle 5 est donc égale à la moitié du temps séparant l'émission des impulsions et la réception de son écho par le transducteur 31. Ensuite, cette durée est soustraite aux temps séparant l'émission des impulsions et la réception des échos par chacun des autres transducteurs 32, 33 non émetteurs. On obtient ainsi, pour chacun des transducteurs 31, 32, 33, la durée de propagation des ultrasons entre l'obstacle 5 et ledit transducteur. Le produit de chacune de ces durées par la vitesse de propagation des ultrasons dans l'air permet ainsi d'obtenir les distances séparant chaque transducteur 31, 32, 33 de l'obstacle 5.

La vitesse de propagation peut être approximée comme constante, aux alentours de 340 m.s$^{-1}$. Cependant, afin d'augmenter la précision, la vitesse de propagation est déterminée en fonction de la température. A cet effet, le système de détection d'obstacle 3 comprend une sonde de température, telle qu'un thermomètre ou un thermocouple, afin de mesurer la température. En effet, la vitesse de propagation des ultrasons dans l'air, comme celle des sons, dépend de la température. Une mesure de la température permet donc d'estimer précisément cette vitesse de propagation et affine ainsi la précision des distances déterminées.

Le traitement peut être affiné en déterminant des correspondances entre les échos enregistrés et les obstacles 5 correspondants. On regroupe alors les échos par obstacles, et la cohérence des distances mesurées est estimée. Les résultats incohérents sont écartés.

Les distances entre l'obstacle 5 et chacun des transducteurs 31, 32, 33 étant connues, ainsi que la disposition des transducteurs entre eux, il est possible de localiser précisément dans l'espace l'obstacle 5 par rapport aux transducteurs 31, 32, 33. On met en oeuvre une technique de trilatération, qui peut être complétée par les mesures d'autres transducteurs.

Voici un exemple de mise en oeuvre du repérage en trois dimensions d'un obstacle, grâce à une technique de trilatération. Dans l'exemple, le premier transducteur émetteur est le transducteur 31. Soient t31, t32, t33 les temps séparant le début de l'émission du train d'impulsions ultrasonores de l'arrivée de l'écho provenant de l'obstacle 5, respectivement enregistré par les transducteurs 31, 32 et 33. Par exemple, le temps t31 correspond au temps mis par le train d'impulsion pour effectuer un aller-retour entre le transducteur 31 et l'obstacle 5. Ces temps t31, t32, t33 sont déterminés à partir des échos enregistrés une fois le filtrage, la détection d'enveloppe, et la détection des pics réalisés.

Soient d31, d32, et d33 les distances séparant respectivement les transducteurs 31, 32 et 33 de l'obstacle 5. Avec *v* la vitesse de propagation des ondes ultrasonores dans l'air, les distances d31, d32, et d33 peuvent être déterminées par les formules suivantes :

$$d31 = \frac{t31}{2} * v$$

$$d32 = \left(t32 - \frac{t31}{2}\right) * v$$

$$d33 = \left(t33 - \frac{t31}{2}\right) * v$$

Déterminer la position de l'obstacle 5 consiste à déterminer l'intersection des trois sphères de rayon d31, d32, et d33 respectivement centrées sur les transducteurs 31, 32 et 33. Afin de simplifier les équations, tous nos calculs sont ici présentés en considérant un repère orthonormé centré sur le transducteur 31, orienté de telle façon à ce que les transducteurs forment un plan Z perpendiculaire à un axe z s'étendant en direction de l'avant du système de détection 3 quand il est utilisé, et ayant pour axe x le vecteur formé par les transducteurs 31 et 32. La position des transducteurs dans ce repère est respectivement (0, 0, 0), (*x32*, 0, 0) et (*x33*, *y33*, 0) pour les transducteurs 31, 32 et 33. Dans le cas de la présence d'un obstacle 5, l'intersection des trois sphères peut donner deux solutions. La première est une position en trois dimensions faisant face au système de détection 3 (sa composante z est positive), et la seconde est le symétrique orthogonale de la première par rapport au plan Z (sa composante z est négative), et se trouve donc derrière le système de détection 3. Puisque qu'il est connu que l'obstacle 5 à détecter se trouve face aux transducteurs 31, 32, 33, la deuxième solution peut être éliminée. La position de l'obstacle 5 a donc les coordonnées (x, y, z) que nous pouvons calculer grâce aux équations suivantes :

$$x = \frac{d31^2 - d32^2 + x32^2}{2 * x32}$$

$$y = \frac{d31^2 - d33^2 + x33^2 + y33^2}{2 * y33}$$

$$z = \sqrt{d31^2 - x^2 - y^2}$$

Il est également possible, en disposant d'au moins quatre transducteurs ultrasonores, de déterminer la localisation des obstacles par multilatération à partir des échos enregistrés. Par rapport à la trilatération évoquée plus haut, qui se base sur le temps de propagation ("time-of-flight" en anglais) des ultrasons entre l'obstacle et les transducteurs, et comprend la détermination de la distance entre l'obstacle et lesdits ultrasons, la multilatération repose sur la différence temporelle entre les instants de réception des échos ultrasonores par les différents transducteurs. On parle de différence de temps d'arrivée ou "time différence of arrival" en anglais. L'intervalle de temps séparant la réception de l'écho d'un obstacle par deux transducteurs différents permet d'estimer la position de l'obstacle sur une hyperboloïde. Avec quatre transducteurs, si les mesures sont extrêmement précises, on obtient trois hyperboloïdes qui s'intersectent en un point, qui correspond à la position de l'obstacle en trois dimensions. En pratique, à cause des erreurs de mesure, les différentes hyperboloïdes ne s'intersectent pas en un point unique. Des algorithmes d'optimisation, tels que la méthode des moindres carrés, peuvent alors être utilisés afin d'estimer au mieux la position de l'obstacle. Plus le nombre de transducteurs est élevé, plus le nombre d'hyperboloïdes est important et plus l'estimation de la position de l'obstacle est précise.

La trilatération et la multilatération sont des exemples préférentiels mais non limitatifs de techniques mises en oeuvre pour localiser spatialement les obstacles à partir des temps d'arrivée des échos aux transducteurs et/ou des différences de temps d'arrivée des échos aux transducteurs.

On a donc mis en oeuvre (étape S3) une détermination de la localisation de l'obstacle 5 par rapport aux transducteurs 31, 32, 33 à partir des temps d'arrivée des échos aux transducteurs et/ou des différences de temps d'arrivée des échos aux transducteurs. La détermination de la localisation spatiale de l'obstacle 5 par rapport aux transducteurs 31, 32, 33 n'est cependant pas optimale en termes d'utilité. En effet, ce qui importe est de pouvoir localiser l'obstacle 5 par rapport à l'utilisateur 2, dans le référentiel de l'utilisateur 2. Il est donc prévu une localisation de l'obstacle 5 dans le référentiel de l'utilisateur 2 à partir de la localisation de l'obstacle 5 dans le référentiel des transducteurs 31, 32, 33. Il est pour cela nécessaire de déterminer la position et l'orientation de l'utilisateur 2 par rapport aux transducteurs 31, 32, 33.

Tout d'abord, la position des transducteurs sur la canne 1 est connue, et cette canne 1 est maintenue par l'utilisateur 2 selon un positionnement connu également. En effet, les déficients visuels apprennent à tenir leur canne d'une façon standardisée. On peut donc connaître, sans mesures supplémentaires, une estimation de la distance entre les transducteurs 31, 32, 33 et l'utilisateur 2. La position de la canne 1 par rapport à l'utilisateur 2 est ensuite déterminée au moyen du dispositif de mesure de mouvement adapté pour mesurer le mouvement de la canne 1. Comme expliqué plus haut, le dispositif de mesure de mouvement est solidaire de la canne 1 et permet de déterminer les mouvements de la canne 1, et sa position. Plus précisément, le dispositif de mesure de mouvements permet de déterminer, directement ou indirectement, les mouvements de la canne selon trois directions non colinéaires, et les positons ou mouvements angulaires. Il s'agit typiquement d'une centrale inertielle.

La connaissance des mouvements et de l'orientation de la canne 1, couplée à la connaissance a priori de la posture de maintien de la canne 1 par l'utilisateur déficient visuel 2, permet de déterminer la localisation de l'obstacle 5 dans le référentiel de l'utilisateur 2. La localisation de l'obstacle 5 par rapport à l'utilisateur 2 est ainsi déterminée (étape S4) à partir de la localisation de l'obstacle 5 par rapport aux transducteurs 31, 32, 33 2 et des mesures du mouvement de l'appareil à main 1.

Seules sont transmises à l'utilisateur déficient visuel les informations concernant les obstacles 5 localisés à l'intérieur d'un espace de sécurité s'étendant devant l'utilisateur déficient visuel 2, éventuellement dans sa direction de déplacement. Cet espace de sécurité est choisi relativement restreint afin de limiter les informations transmises aux seuls obstacles que l'utilisateur déficient visuel 2 est susceptible de rencontrer. Ainsi, grâce à la localisation en trois dimensions des obstacles, il est possible de mieux avertir l'utilisateur.

Typiquement, cet espace de sécurité s'étend en avant sur une distance de quelques mètres, typiquement entre un mètre et trois mètres. Il peut s'étendre en hauteur depuis le sol jusqu'à la hauteur de la stature de l'utilisateur, généralement inférieure à deux mètres, afin de ne pas alerter l'utilisateur de la présence de plafonds tout en permettant de lui signaler la présence d'un éventuel obstacle en hauteur. L'espace de sécurité s'étend enfin sur une largeur correspondant à la largeur des épaules de l'utilisateur. La largeur de l'espace de sécurité peut être prédéterminée à une largeur standard, ou bien être déterminée lors d'une phase de calibration en fonction de l'utilisateur, en prenant éventuellement en compte l'amplitude du balayage de sa canne. La largeur peut encore être déterminée en fonction d'un angle prédéterminé à partir de l'utilisateur.

La simple présence d'un obstacle 5 dans l'espace de sécurité ne signifie cependant pas que cet obstacle va gêner l'utilisateur. L'obstacle 5 peut se déplacer dans la même direction que l'utilisateur et donc ne représenter aucune gêne. Il n'y a alors pas lieu d'en informer l'utilisateur déficient visuel 2. A l'opposé, un obstacle 5 hors de l'espace de sécurité peut représenter un danger important, par exemple parce que l'obstacle 5 se déplace selon une trajectoire qui va croiser celle de l'utilisateur déficient visuel 2. En outre, un utilisateur déficient visuel 2 a besoin d'un espace de sécurité plus ou moins étendu en fonction de sa vitesse de déplacement. Il est donc préférable de déterminer le déplacement de l'utilisateur déficient visuel 2 et/ou de l'obstacle 5 par rapport à l'utilisateur déficient visuel 2.

La connaissance des mouvements de la canne 1 peut également être exploitée pour préciser un positionnement de l'utilisateur. A cet égard, le système de détection peut comprendre des moyens de communication, par exemple sans fil type Bluetooth, adaptés pour recevoir des informations de positionnement. Typiquement, il peut s'agir de moyen de communication avec un terminal portatif type téléphone intelligent ledit terminal portatif étant équipé d'un récepteur d'un système de positionnement par satellite, par exemple de type Galileo ou GPS pour l'anglais "Global Positioning Système". Le terminal portatif transmet au système de détection les informations de positionnement. Le système de détection 3 est alors configuré mettre en oeuvre une géolocalisation à partir desdites informations de positionnement et à partir des mesures du mouvement de l'appareil. Le système de détection 3 peut également comprendre un récepteur d'un système de positionnement par satellite.

A partir des informations de positionnement, on peut déterminer la vitesse et la direction de déplacement de l'utilisateur déficient visuel 2. Ces données ne sont cependant pas très précises, le GPS présentant par exemple une précision maximale de plusieurs mètres. En revanche, on peut améliorer ces données de positionnement grâce à la connaissance des mouvements de la canne 1. En effet, les mouvements de la canne 1 opérés par un utilisateur déficient visuel 2 correspondent habituellement à un balayage régulier d'amplitude contrôlée devant lui. Pour un balayage correctement effectué, à un balayage aller-retour correspond deux pas. On peut donc affiner les données grâce à la connaissance du nombre de pas effectués, qui sont généralement proches en amplitude lorsque le balayage de la canne 1 est mis en oeuvre. Via un étalonnage de la relation entre le balayement de la canne 1 et la distance parcourue, il est possible de déterminer une vitesse ou une distance parcourue par un utilisateur déficient visuel 2 à partir des mesures du mouvement de la canne 1. Il est également possible d'utiliser des données provenant d'un podomètre, par exemple présent dans un téléphone intelligent connecté au moyen d'un standard de communication sans fil type Bluetooth au système de détection d'obstacles 3, afin d'améliorer la précision du calcul du nombre de pas effectués par l'utilisateur déficient visuel 2. En combinant ainsi les mesures du mouvement de la canne 1 avec les informations de positionnement, on améliore ainsi la précision de la détermination de la position par rapport à l'exploitation des seules informations de positionnement. On améliore donc la géolocalisation.

En outre, d'éventuelles données de géolocalisation, couplées à des données géographiques comme des cartes, peuvent être utilisées pour fournir des indications autres que la détection d'obstacles, comme le fait que la trajectoire de l'utilisateur va croiser une route, ou bien permet d'activer certaines fonctionnalités comme l'activité des alertes sonores des feux tricolores lorsque l'utilisateur 2 s'en approche.

Les obstacles et leurs localisations respectives sont conservés en mémoire un certain temps. La localisation d'un obstacle 5 est comparée avec les localisations des obstacles précédemment localisés lors des itérations précédentes. La localisation d'un obstacle à un instant t est ainsi comparée aux localisations des obstacles aux instants précédents $t_{-1}$, $t_{-2}$, ..., jusqu'à $t_{-n}$. Le nombre n d'instants précédents pris en compte est suffisamment élevé pour que cette comparaison ne souffre pas d'une éventuelle erreur de détermination affectant l'une des localisations et pour minimiser les incertitudes. De préférence, n est supérieur à cinq, et par exemple dix instants précédents sont pris en compte.

Afin de pouvoir suivre, comparer et filtrer la position des obstacles dans le temps, les coordonnées de chaque obstacle sont déterminées dans un repère absolu, de façon à être indépendantes des mouvements de l'utilisateur 2 et de sa canne 1. L'origine de ce repère est définie lors de l'allumage (ou sortie de veille) du système de détection 3, et ses axes ont la même orientation que ceux du repère du dispositif de mesure de mouvement, tel que la centrale inertielle embarquée. Les coordonnées des obstacles sont ainsi définies de façon absolue par des triplets de coordonnées ($x$, $y$, $z$) dont l'unité est le mètre. Les coordonnées d'un obstacle 5 sont comparées avec celles des obstacles précédemment localisés lors des itérations précédentes. La localisation d'un obstacle à un instant t est ainsi comparée aux localisations des obstacles à l'instant précédents $t_{-1}$. Si la distance séparant un obstacle détecté à l'instant t avec un obstacle détecté à l'instant $t_{-1}$ est inférieure à un seuil fixé, il est supposé qu'il s'agit du même obstacle. La position de l'obstacle est ainsi mise à jour.

Les coordonnées des obstacles qui se trouvent à une distance donnée de l'utilisateur 2 (par exemple plus de 5 m) sont régulièrement supprimées de la mémoire. Un compteur lié à chaque obstacle permet également de supprimer les obstacles qui n'ont pas été détectés depuis trop longtemps (et ne sont ainsi vraisemblablement plus présents). Le compteur est défini ou redéfini à une valeur n (comprise entre 5 et 100) à chaque fois que l'obstacle est détecté, et est décrémenté à chaque itération si celui-ci n'a pas était détecté de nouveau. Lorsque le compteur arrive à zéro, l'obstacle est supprimé de la mémoire. Il est également possible de mettre en place un horodatage des obstacles, affectant à ceux-ci un temps, utilisé pour prendre en compte une durée de validité de l'obstacle, au-delà de laquelle l'obstacle est supprimé de la mémoire.

Une différence entre la position actualisée de l'obstacle 5 précédemment déterminée et la position nouvellement déterminée, lorsqu'elle est inférieure à un certain seuil, peut indiquer un déplacement de l'obstacle. C'est par exemple le cas d'un cycliste ou d'un piéton, qui peuvent présenter un déplacement distinct de celui engendré par l'utilisateur déficient visuel 2.

Lorsque la différence entre la position actualisée de l'obstacle 5 précédemment déterminée et la position nouvellement déterminée est supérieure à un certain seuil, c'est qu'il s'agit d'un autre obstacle 5. Puisque la comparaison est menée sur l'ensemble des obstacles 5 précédemment localisés, deux cas de figures peuvent se présenter : soit l'obstacle de l'instant courant correspond à un obstacle 5 déjà détecté précédemment comme exposé ci-dessus, soit il s'agit d'un nouvel obstacle 5 entrant dans le champ de détection.

La comparaison entre la position actuelle d'un obstacle et ses positions précédentes permet de déterminer la vitesse de l'obstacle 5 et sa direction par rapport à l'utilisateur déficient visuel 2, c'est-à-dire dans son référentiel. Un éventuel lissage des vitesses et des directions grâce aux valeurs précédemment déterminées peut être effectué.

Après quelques millisecondes, une nouvelle itération est commencée, avec de nouveau l'émission d'ultrasons par un transducteur, et la réception des éventuels échos par les transducteurs, puis le traitement des données récoltées comme décrit plus haut.

En utilisant la connaissance de la vitesse et de la direction de l'utilisateur 2, comparée aux vitesses et directions respectives de chacun des obstacles, on peut déterminer quel obstacle 5 se trouve sur le parcours de l'utilisateur 2 et serait susceptible de représenter un danger imminent. Cela permet de restreindre la quantité d'informations transmises à l'utilisateur déficient visuel 2 à celles réellement pertinentes pour lui, concernant les seuls obstacles 5 susceptibles d'entraver son déplacement.

Ainsi, lorsque des personnes marchent devant le déficient visuel dans la même direction que lui, par exemple sur un trottoir, elles ne sont pas susceptibles de gêner son déplacement, et l'information concernant leur détection et leur localisation n'est donc pas transmise au déficient visuel. En revanche, lorsque qu'un obstacle 5 localisé est susceptible de croiser le déplacement de d'utilisateur déficient visuel 2, parce que celui-ci se dirige vers l'obstacle 5, ou parce que la trajectoire de l'obstacle 5 va croiser celle du déficient visuel, une alerte est transmise à l'utilisateur déficient visuel 2. L'alerte est donc émise (étape S5) à destination de l'utilisateur 2 en en fonction de la localisation de l'obstacle 5 par rapport à l'utilisateur 2 et du déplacement de l'obstacle 5 par rapport à l'utilisateur.

Cette alerte peut être transmise de différente façon, et contient une indication de la proximité de l'obstacle 5, prenant éventuellement en compte également sa vitesse de rapprochement. Dans le cas où cette information est transmise par le son, des moyens d'émission sonore, tels que des écouteurs ou des haut-parleurs, émettent le son porteur de l'information. L'intensité sonore, la fréquence sonore ou bien le type de son émis peut alors être fonction de la distance entre l'utilisateur 2 et la localisation de l'obstacle 5, et ainsi varier en fonction de la proximité de l'obstacle. Par exemple, l'intensité sonore peut être plus forte pour un obstacle proche que pour un obstacle plus éloigné, et/ou la fréquence du son émis peut varier avec la hauteur de la localisation de l'obstacle détecté.

De préférence, les moyens d'émission sonore sont adaptés pour restituer un son spatialisé et permettent donc une spatialisation de l'information sonore correspondant à la localisation de l'obstacle par rapport à l'utilisateur 2. Ces moyens d'émission sonores peuvent être munis d'au moins un capteur de mouvement, type centrale inertielle, afin que la spatialisation du son suive le déplacement de la tête de l'utilisateur 2. De préférence, les moyens d'émission sonores sont des moyens d'émission sonore binauraux, mettant en oeuvre un procédé binaural de restitution des sons. De préférence également, les moyens d'émission sonore sont des écouteurs placés en-avant des pavillons des oreilles de l'utilisateur 2 afin de ne pas restreindre la perception par celui-ci de son environnement sonore.

L'information peut également être transmise au moyen de vibrations produites par un vibreur disposé au niveau de la zone de préhension 11 de la canne 1 par le déficient visuel. Dans ce cas, c'est l'intensité de la vibration, sa fréquence ou bien la fréquence de répétition de cette vibration qui peut indiquer la proximité de l'obstacle 5.

Un mode de veille suspendant l'émission d'ultrasons et l'enregistrement d'éventuels échos peut être déclenché lorsque le dispositif de mesure de mouvement ne détecte pas de mouvements au-dessus d'un seuil donné pendant un temps déterminé. Le système de détection 3 sort de son mode de veille lorsque des mouvements dépassant un seuil sont de nouveau mesurés.

Comme indiqué plus haut, le système de détection d'obstacles 3 peut être muni de moyens de communication configurés pour communiquer sans fil avec un terminal portatif type téléphone intelligent, par exemple par ondes radio UHF comme prévu par le standard Bluetooth, non seulement pour recevoir des données de positionnement, mais également pour tout autre type d'utilisation. Par exemple, il peut être tiré parti de cette communication pour transmettre des instructions audit terminal portatif. A cet égard, et comme illustré sur la figure 1, le système de détection d'obstacles 3 peut être muni d'une interface de commande tactile 35, comportant des boutons, de préférence accessibles au pouce de l'utilisateur 2 lorsqu'il manipule la canne 1 sur laquelle est monté le système de détection d'obstacles 3.

Grâce à ces commandes, l'utilisateur 2 peut ainsi interagir avec le système de détection 3 ou via celui-ci avec le terminal portatif pour, au moyen d'une application adéquate exécutée par ledit terminal, par exemple faire défiler des fonctionnalités, valider et annuler des instructions. Par exemple, l'utilisateur 2 peut faire un choix parmi des itinéraires préenregistrés, et l'application, au moyen d'un récepteur d'un système de positionnement par satellite, de type Galileo ou GPS pour l'anglais "Global Positioning Système", intégré au terminal portatif, peut alors émettre des informations auditives à destination de l'utilisateur 2 en fonction de sa position, et éventuellement sa vitesse et direction, afin de l'orienter et de l'aider à suivre l'itinéraire choisi. Cet itinéraire est de préférence défini sous forme de balises sonores virtuelles réparties le long dudit trajet, schématisant les différentes étapes et changement de direction qu'il doit effectuer. Grâce à une spatialisation des sons émis, l'utilisateur entend et comprend à chaque instant la localisation de la prochaine balise sonore virtuelle vers laquelle il doit se rendre. Les balises sont des points repérés par des coordonnées du système de positionnement par satellite qui permettent, en pratique, l'émission de sons spatialisés dans l'environnement de l'utilisateur.

Il est également possible de mettre en place une grammaire sonore, dans laquelle des sons émis par les moyens d'émission sonore varient en fonction de la localisation et/ou du déplacement de l'utilisateur déficient visuel par rapport à une référence telle qu'un réseau de balises numériques sonores virtuelles qui peuvent constituer des trajets sonores ou des points d'intérêts généraux. La grammaire sonore permet à l'utilisateur de comprendre son environnement de façon intuitive, sans augmenter sa charge cognitive.

Cette grammaire sonore peut faire office d'interface homme-machine (IHM) sonore, qui permet à l'utilisateur de se mouvoir et d'interagir avec son environnement, sans voir. Elle peut correspondre à une norme sonore dans le domaine de la mobilité, de l'accessibilité et de la sécurité.

D'autres connexions peuvent être envisagées. Par exemple, l'appareil à main peut être muni de moyens de communication sans fil configurés pour communiquer avec une balise placée dans l'environnement. On peut trouver de telles balises pour plusieurs applications. Un type courant de balise équipe ainsi les feux de circulation routière, typiquement pour commander l'émission d'un avertisseur sonore tel qu'une ritournelle, en fonction de l'état du feu de circulation. D'autres balises peuvent être placées dans des lieux publics, comme un centre commercial ou une gare, ou bien encore une aubette. Ces balises peuvent servir à communiquer des informations à l'utilisateur, non seulement de façon sonore, mais éventuellement également sous formes de données numériques transmises à l'appareil à main.

Les moyens de communication sans fil peuvent également connecter l'appareil à main à divers accessoires, comme par exemple un bracelet ou une montre connectée, et tirer profit des fonctionnalités offertes par ces accessoires. Le système peut alors avoir accès, via ces accessoires, à des mesures supplémentaires, comme par exemple des mesures de mouvement, permettant d'améliorer la navigation, le positionnement, et/ou la détection d'obstacles. La connexion sans fil peut également être faite avec les moyens d'émission sonore, tels que des écouteurs, ou bien avec un dispositif de commande déporté.

Il est à noter que la connaissance des mouvements de la canne 1 peut également être utilisée pour mettre en oeuvre un apprentissage de la manipulation de celle-ci. En effet, une manipulation correcte d'une canne n'est pas aisée et implique des contraintes strictes de régularité et d'amplitude. Le système peut alors être utilisé, par exemple au moyen d'un mode de fonctionnement d'apprentissage dédié, pour entraîner un utilisateur à manipuler correctement la canne. On peut par exemple prévoir une stimulation sensorielle (auditive ou tactile) sur laquelle l'utilisateur synchronise les mouvements de la canne, ou bien une indication sensorielle reflétant les limites d'amplitude d'un mouvement correct de la canne, limites d'amplitude également désignées par le terme d'informations de butée. Cela permet en effet à l'utilisateur d'être formé au balayement de la canne blanche traditionnelle. Ces retours sonores ou haptiques, sont conçus de façon à permettre à l'utilisateur d'apprendre à prolonger suffisamment et à l'horizontal son geste de balayage, et d'emprunter le bon rythme de balayement dans sa marche

L'invention n'est pas limitée au mode de réalisation décrit et représenté aux figures annexées. Des modifications restent possibles, notamment du point de vue de la constitution des divers éléments, tant qu'elles ne sortent pas de l'étendue de protection définie par les revendications.

## Revendications

1. Procédé de localisation d'obstacles au moyen d'un appareil à main (1) pour un utilisateur déficient visuel (2) comprenant un système de détection d'obstacles (3) monté sur ledit appareil (1) comprenant des transducteurs (31, 32, 33) à ultrasons configurés pour émettre des ultrasons et enregistrer des échos desdits ultrasons et des moyens d'alerte d'un utilisateur (2) adaptés pour informer ledit utilisateur (2) de la proximité d'un obstacle (5), le système comprenant un dispositif de mesure de mouvement adapté pour mesurer le mouvement dudit appareil à main,

   **caractérisé en ce que** ledit procédé comprenant la mise en oeuvre itérative des étapes selon lesquelles:

   a) un transducteur (31, 32, 33) émet (S1) des ultrasons,
   b) au moins trois transducteurs non alignés (31, 32, 33) enregistrent (S2) des échos des ultrasons sur un obstacle (5),
   c) une détermination de la localisation de l'obstacle (5) par rapport aux transducteurs (31, 32, 33) est mise en oeuvre (S3) à partir des temps d'arrivée des échos aux transducteurs et/ou des différences de temps d'arrivée des échos aux transducteurs,
   d) la position et l'orientation de l'utilisateur (2) par rapport aux transducteurs (31, 32, 33) est déterminée à partir des mesures du mouvement de l'appareil à main (1) provenant du dispositif de mesure de mouvement, de la position connue des transducteurs sur l'appareil à main (1), et de la posture connue de maintien de l'appareil à main par l'utilisateur, et la localisation de l'obstacle par rapport à l'utilisateur est déterminée (S4) à partir de la localisation de l'obstacle (5) par rapport aux transducteurs (31, 32, 33) et de la position et l'orientation de l'utilisateur (2) par rapport aux transducteurs, couplées à une connaissance a priori de la posture de maintien de l'appareil à main par l'utilisateur,

e) une alerte est émise (S5) à destination de l'utilisateur (2) en fonction de la proximité de la localisation de l'obstacle (5) par rapport à l'utilisateur (2) et du déplacement de l'obstacle (5) par rapport à l'utilisateur.

2. Procédé selon la revendication précédente, dans lequel la détermination de la localisation de l'obstacle (5) par rapport aux transducteurs (31, 32, 33) est mise en oeuvre par trilatération à partir des temps d'arrivée des échos aux transducteurs ou par multilatération à partir des différences de temps d'arrivée des échos aux transducteurs.

3. Procédé selon l'une quelconque des revendications précédentes, dans lequel la localisation d'un obstacle comprend la détermination des coordonnées de chaque obstacle dans un repère absolu, indépendantes des mouvements de l'utilisateur (2) et de l'appareil à main.

4. Procédé selon la revendication précédente, dans lequel le déplacement de l'obstacle (5) par rapport à l'utilisateur (2) est déterminé en comparant la localisation d'un obstacle à un instant avec des localisations dudit obstacle précédemment déterminées lors des itérations précédentes dans le repère absolu, puis la vitesse de l'obstacle (5) et sa direction par rapport à l'utilisateur (2) sont déterminées, et l'émission de l'alerte prend en compte la vitesse de l'obstacle (5) dans le référentiel de l'utilisateur et la trajectoire suivie par l'obstacle dans le référentiel de l'utilisateur (2).

5. Procédé selon l'une des revendications précédentes, dans lequel les ultrasons sont émis par le transducteur (31, 32, 33) lors de l'étape a) sous la forme d'un train d'impulsions, le nombre d'impulsions variant entre les émissions de deux itérations consécutives.

6. Procédé selon l'une quelconque des revendications précédentes, dans lequel le nombre d'impulsion varie en fonction des obstacles détectés et/ou en fonction de la vitesse de déplacement de l'appareil à main.

7. Procédé selon l'une des revendications précédentes, dans lequel le transducteur (31, 32, 33) qui émet des ultrasons dans l'étape a) enregistre des ultrasons dans l'étape b), et/ ou le transducteur (31, 32, 33) qui émet les ultrasons dans l'étape a) change en fonction des itérations.

8. Procédé selon l'une des revendications précédentes, dans lequel l'alerte est émise par des moyens d'émission sonore mettant en oeuvre une spatialisation du son en fonction de la localisation de l'obstacle (5).

9. Appareil à main (1) pour un utilisateur déficient visuel (2) comprenant un système de détection d'obstacles (3) monté sur ledit appareil (1) comprenant des transducteurs (31, 32, 33) à ultrasons configurés pour émettre des ultrasons et enregistrer des échos desdits ultrasons et des moyens d'alerte d'un utilisateur (2) adaptés pour informer ledit utilisateur (2) de la proximité d'un obstacle (5), le système comprenant au moins trois transducteurs (31, 32, 33) à ultrasons qui sont non alignés et le système comprenant un dispositif de mesure de mouvement adapté pour mesurer le mouvement dudit appareil à main, le système (3) étant configuré pour déterminer des temps d'arrivée des échos aux transducteurs et/ou des différences de temps d'arrivée des échos aux transducteurs et pour mettre en oeuvre une localisation d'obstacles (5) dans l'espace par rapport à l'utilisateur (2) à partir desdits temps d'arrivée ou différences de temps d'arrivée et de la mesure du mouvement de l'appareil à main (1), **caractérisé en ce que** l'appareil à main est configuré pour mettre en oeuvre le procédé selon l'une quelconque des revendications précédentes.

10. Appareil à main (1) selon la revendication 9, dans lequel les moyens d'alerte de l'utilisateur (2) comprennent des moyens d'émission sonore et/ou un vibreur.

11. Appareil à main (1) selon l'une des revendications 9 à 10, dans lequel le système (3) comprend une sonde de température adaptée pour mesurer la température, le système étant configuré pour déterminer une vitesse des ultrasons en fonction de ladite température.

12. Appareil à main (1) selon l'une quelconque des revendications 9 à 11, dans lequel les moyens d'alerte sont des moyens d'émission sonore adaptés pour restituer un son spatialisé et munis d'au moins un capteur de mouvement.

13. Appareil à main (1) selon l'une quelconque des revendications 9 à 12, dans lequel le système de détection comprend en outre des moyens de communication adaptés pour recevoir des informations de positionnement, ledit système étant configuré mettre en oeuvre une géolocalisation à partir desdites informations de positionnement et à partir des mesures du mouvement dudit appareil.

14. Produit programme d'ordinateur comprenant des instructions de code de programme enregistrées sur un support utilisable dans un ordinateur pour commander l'exécution des étapes du procédé selon l'une des revendications 1 à 8 lorsque ledit programme est exécuté par des moyens de calcul de l'appareil à main selon la revendication 9.

**Patentansprüche**

1. Verfahren zur Lokalisierung von Hindernissen mittels eines Handgeräts (1) für einen Benutzer mit Sehschwäche (2), das ein System zur Ermittlung von Hindernissen (3) umfasst, das auf dem Gerät (1) angebracht ist, umfassend Ultraschallwandler (31, 32, 33), die dazu ausgelegt sind, den Ultraschall zu senden und die Ultraschallechos zu registrieren und Warnmittel eines Benutzers (2), die geeignet sind, den Benutzer (2) über die Nähe eines Hindernisses (5) zu informieren, wobei das System eine Vorrichtung zum Messen der Bewegung umfasst, die geeignet ist, die Bewegung des Handgeräts zu messen,
**dadurch gekennzeichnet, dass** das Verfahren die wiederholte Durchführung der Schritte umfasst, gemäß denen:

   a) ein Wandler (31, 32, 33) Ultraschall sendet (S1),
   b) mindestens drei nicht ausgerichtete Wandler (31, 32, 33) Ultraschallechos an einem Hindernis (5) registrieren (S2),
   c) eine Bestimmung der Lokalisierung des Hindernisses (5) im Verhältnis zu den Wandlern (31, 32, 33) ausgehend von den Ankunftszeiten der Echos an den Wandlern und/oder den Unterschieden der Ankunftszeiten der Echos an den Wandlern durchgeführt (S3) wird,
   d) die Position und die Ausrichtung des Benutzers (2) im Verhältnis zu den Wandlern (31, 32, 33) ausgehend von den Messungen der Bewegung des Handgeräts (1), die von der Vorrichtung zum Messen der Bewegung kommen, der bekannten Position der Wandler auf dem Handgerät (1), der bekannten Haltehaltung des Handgeräts durch den Benutzer bestimmt wird und die Lokalisierung des Hindernisses im Verhältnis zum Benutzer ausgehend von der Lokalisierung des Hindernisses (5) im Verhältnis zu den Wandlern (31, 32, 33) und der Position und der Ausrichtung des Benutzers (2) im Verhältnis zu den Wandlern, die an eine von vornherein bekannte Kenntnis der Haltehaltung des Handgeräts durch den Benutzer gekoppelt sind, bestimmt (S4) wird,

   e) eine Warnung an den Benutzer (2) in Abhängigkeit von der Nähe der Lokalisierung des Hindernisses (5) im Verhältnis zum Benutzer (2) und von der Verlagerung des Hindernisses (5) im Verhältnis zum Benutzer gesendet (S5) wird.

2. Verfahren nach vorangehendem Anspruch, wobei die Bestimmung der Lokalisierung des Hindernisses (5) im Verhältnis zu den Wandlern (31, 32, 33) durch Trilateration ausgehend von den Ankunftszeiten der Echos an den Wandlern oder durch Multilateration ausgehend von den Unterschieden der Ankunftszeiten der Echos an den Wandlern durchgeführt wird.

3. Verfahren nach einem der vorangehenden Ansprüche, wobei die Lokalisierung eines Hindernisses die Bestimmung der Koordinaten jedes Hindernisses in einem absoluten Bezugssystem umfasst, die von den Bewegungen des Benutzers (2) und des Handgeräts unabhängig sind.

4. Verfahren nach vorangehendem Anspruch, wobei die Verlagerung des Hindernisses (5) im Verhältnis zum Benutzer (2) durch Vergleichen der Lokalisierung eines Hindernisses zu einem Moment mit zuvor bei vorhergehenden Wiederholungen im absoluten Bezugssystem bestimmten Lokalisierungen des Hindernisses bestimmt wird, dann die Geschwindigkeit des Hindernisses (5) und seine Richtung im Verhältnis zum Benutzers (2) bestimmt werden, und die Sendung der Warnung die Geschwindigkeit des Hindernisses (5) im Bezugssystem des Benutzers und den vom Hindernis im Bezugssystem des Benutzers (2) verfolgten Weg berücksichtigt.

5. Verfahren nach einem der vorangehenden Ansprüche, wobei der Ultraschall von dem Wandler (31, 32, 33) bei Schritt a) in Form einer Impulsfolge gesendet wird, wobei die Anzahl der Impulse zwischen den Sendungen zweier aufeinanderfolgender Wiederholungen schwankt.

6. Verfahren nach einem der vorangehenden Ansprüche, wobei die Anzahl der Impulse in Abhängigkeit von den ermittelten Hindernissen und/oder in Abhängigkeit von der Geschwindigkeit der Verlagerung des Handgeräts schwankt.

7. Verfahren nach einem der vorangehenden Ansprüche, wobei der Wandler (31, 32, 33), der Ultraschall in Schritt a) sendet, den Ultraschall in Schritt b) registriert, und/oder der Wandler (31, 32, 33), der Ultraschall in Schritt a) sendet, sich in Abhängigkeit von den Wiederholungen ändert.

8. Verfahren nach einem der vorangehenden Ansprüche, wobei die Warnung von Schallsendemitteln gesendet wird, die eine Spatialisierung des Schalls in Abhängigkeit von der Lokalisierung des Hindernisses (5) durchführen.

9. Handgerät (1) für einen Benutzer mit Sehschwäche (2), das ein System zur Ermittlung von Hindernissen (3) umfasst, das auf dem Gerät (1) angebracht ist, umfassend Ultraschallwandler (31, 32, 33), die dazu ausgelegt sind, den Ultraschall zu senden und die Ultraschallechos zu registrieren und Warnmittel eines Benutzers (2), die geeignet sind, den Benutzer (2) über die Nähe eines Hindernisses (5) zu informieren, wobei das System mindestens drei Ultraschallwandler (31, 32, 33) umfasst, die nicht ausgerichtet sind und das System eine Vorrichtung zum Messen der Bewegung umfasst, das geeignet ist, die Bewegung des Handgeräts zu messen,
wobei das System (3) dazu ausgelegt ist, Ankunftszeiten der Echos an den Wandlern und/oder Unterschiede der Ankunftszeiten der Echos an den Wandlern zu bestimmen und eine Lokalisierung von Hindernissen (5) im Raum im Verhältnis zu dem Benutzer (2) ausgehend von den Ankunftszeiten oder Unterschieden der Ankunftszeiten und der Messung der Bewegung des Handgeräts (1) durchzuführen, **dadurch gekennzeichnet, dass** das Handgerät dazu ausgelegt ist, das Verfahren nach einem der vorangehenden Ansprüche durchzuführen.

10. Handgerät (1) nach Anspruch 9, wobei die Warnmittel des Benutzers (2) Schallsendemittel und/oder einen Vibrator umfassen.

11. Handgerät (1) nach einem der Ansprüche 9 bis 10, wobei das System (3) eine Temperatursonde umfasst, die zum Messen der Temperatur geeignet ist, wobei das System dazu ausgelegt ist, eine Geschwindigkeit des Ultraschalls in Abhängigkeit von der Temperatur zu bestimmen.

12. Handgerät (1) nach einem der Ansprüche 9 bis 11, wobei die Warnmittel Schallsendemittel sind, die geeignet sind, einen spatialisierten Schall wiederzugeben und mit mindestens einem Bewegungssensor ausgestattet sind.

13. Handgerät (1) nach einem der Ansprüche 9 bis 12, wobei das Erfassungssystem ferner Kommunikationsmittel umfasst, die zum Empfang von Positionierungsinformationen geeignet sind, wobei das System dazu ausgelegt ist, eine Geolokalisierung ausgehend von Positionierungsinformationen und ausgehend von Bewegungsmessungen des Geräts durchzuführen.

14. Rechnerprogrammprodukt, umfassend Programmcodebefehle, die auf einem Träger registriert sind, der in einem Rechner verwendbar ist, um die Ausführung der Schritte des Verfahrens nach einem der Ansprüche 1 bis 8 zu steuern, wenn das Programm von den Rechenmitteln des Handgeräts nach Anspruch 9 ausgeführt wird.

**Claims**

1. A method of locating obstacles by means of a hand-held device (1) for a visually impaired user (2) comprising an obstacle detection system (3) mounted on said device (1) comprising ultrasonic transducers (31, 32, 33) configured to emit ultrasound and record echoes of said ultrasound and user (2) alerting means adapted to inform said user (2) of the proximity of an obstacle (5), the system comprising a movement measuring device adapted to measure the movement of said hand-held device,
**characterized in that** said method comprises the iterative implementation of the steps according to which:

    a) a transducer (31, 32, 33) emits ultrasound (S1),
    b) at least three non-aligned transducers (31, 32, 33) record (S2) ultrasound echoes on an obstacle (5),
    c) the location of the obstacle (5) relative to the transducers (31, 32, 33) is determined (S3) from the arrival times of the echoes at the transducers and/or the differences in arrival times of the echoes at the transducers,
    d) the position and orientation of the user (2) relative to the transducers (31, 32, 33) is determined from measurements of the motion of the hand-held device (1) from the motion-measuring device, the known position of the transducers on the hand-held device (1), and the known holding posture of the hand-held device by the user, and the location of the obstacle relative to the user is determined (S4) from the location of the obstacle (5) relative to the transducers (31, 32, 33) and from the position and orientation of the user (2) relative to the transducers, coupled with a priori knowledge of the user's hand-held device holding posture ,
    e) an alert is issued (S5) to the user (2) depending on the proximity of the obstacle (5) to the user (2) and the displacement of the obstacle (5) to the user.

2. Method according to the preceding claim, in which the determination of the location of the obstacle (5) relative to the transducers (31, 32, 33) is implemented by trilateration from the arrival times of the echoes at the transducers or by multilateration from the differences in arrival times of the echoes at the transducers.

3. A method according to any one of the preceding claims, wherein locating an obstacle comprises determining the coordinates of each obstacle in an absolute reference frame, independent of the movements of the user (2) and the hand-held device.

4. Method according to the preceding claim, in which the displacement of the obstacle (5) relative to the user (2) is determined by comparing the location of an obstacle at an instant with locations of said obstacle previously determined during previous iterations in the absolute reference frame, then the speed of the obstacle (5) and its direction relative to the user (2) are determined, and the emission of the alert takes into account the speed of the obstacle (5) in the user's frame of reference and the trajectory followed by the obstacle in the user's (2) frame of reference.

5. Method according to one of the preceding claims, in which the ultrasound is emitted by the transducer (31, 32, 33) in step a) in the form of a pulse train, the number of pulses varying between the emissions of two consecutive iterations .

6. Method according to any one of the preceding claims, in which the number of pulses varies as a function of the obstacles detected and/or as a function of the speed of movement of the hand-held device.

7. Method according to one of the preceding claims, in which the transducer (31, 32, 33) which emits ultrasound in step a) records ultrasound in step b), and/or the transducer (31, 32, 33) which emits ultrasound in step a) changes as a function of the iterations.

8. Method according to one of the preceding claims, in which the alert is emitted by sound emission means implementing a spatialization of the sound as a function of the location of the obstacle (5).

9. A hand-held device (1) for a visually impaired user (2) comprising an obstacle detection system (3) mounted on said device (1) comprising ultrasonic transducers (31, 32, 33) configured to emit ultrasound and record echoes of said ultrasound and user (2) alerting means adapted to inform said user (2) of the proximity of an obstacle (5), the system comprising at least three ultrasonic transducers (31, 32, 33) which are non-aligned and the system comprising a movement measuring device adapted to measure the movement of said hand-held device, the system (3) being configured to determine arrival times of the echoes at the transducers and/or arrival time differences of the echoes at the transducers and to implement a localization of obstacles (5) in space with respect to the user (2) on the basis of said arrival times or arrival time differences and the measurement of the movement of the handheld device (1), **characterized in that** the handheld device is configured to implement the method according to any one of the preceding claims.

10. A hand-held device (1) as claimed in claim 9, wherein the user alerting means (2) comprise sound emitting means and/or a vibrator.

11. A hand-held device (1) according to one of claims 9 to 10, wherein the system (3) comprises a temperature probe adapted to measure temperature, the system being configured to determine an ultrasonic velocity as a function of said temperature.

12. Hand-held device (1) according to any one of claims 9 to 11, in which the alerting means are sound-emitting means adapted to reproduce a spatialized sound and provided with at least one movement sensor.

13. Hand-held device (1) according to any one of claims 9 to 12, wherein the detection system further comprises communication means adapted to receive positioning information, said system being configured to implement geolocation from said positioning information and from measurements of the movement of said device.

14. A computer program product comprising program code instructions recorded on a medium usable in a computer for controlling the execution of the steps of the process according to any one of claims 1 to 8 when said program is executed by computing means of the hand-held device according to claim 9.

# FIG 1

# FIG 2a

# FIG 2b

# FIG 3a

5

32

33

31

# FIG 3b

5

32

33

31

# FIG 3c

5

32

33

31

# FIG 3d

# FIG 3e

# FIG 4

Emission d'ultrasons — S1

Réception et enregistrement d'ultrasons — S2

Détermination de la localisation par rapport aux transducteurs — S3

Détermination de la localisation par rapport à l'utilisateur — S4

Emission d'une alerte — S5

**EP 3 109 668 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014006243 A
- WO 2012040703 A
- EP 2641579 A1
- US 20120062357 A1